# EUROPÄISCHE PATENTSCHRIFT

(11) **EP 1 119 839 B1**
(45) Veröffentlichungstag und Bekanntmachung des Hinweises auf die Patenterteilung: **02.08.2006**
(21) Anmeldenummer: 99952587.6
(22) Anmeldetag: 15.10.1999
(51) Int. Cl.: G08G 1/09, H04H 1/00

(54) **VERFAHREN ZUR ERMITTLUNG VON FAHRTROUTENDATEN IN EINEM KRAFTFAHRZEUG**
METHOD FOR DETERMINING TRAVEL ROUTE DATA IN A MOTOR VEHICLE
PROCEDE DE DETERMINATION DE DONNEES D'ITINERAIRE ROUTIER DANS UN VEHICULE AUTOMOBILE

(30) Priorität: 17.10.1998 DE 19848006
(43) Veröffentlichungstag der Anmeldung: 01.08.2001
(73) Patentinhaber: Delphi Technologies, Inc., Troy, MI 48098 (US)
(72) Erfinder: FISCHER, Ines, D-90489 Nürnberg (DE); HORN, Georg, D-91301 Forchheim (DE); LEBENDER, Jörg, D-91466 Gerhardshofen (DE); PASCHOLD, Udo, D-90765 Fürth (DE)
(74) Vertreter: Manitz, Finsterwald & Partner GbR
(86) Internationale Anmeldenummer: PCT/EP1999/007825
(87) Internationale Veröffentlichungsnummer: WO 2000/023963

(56) Entgegenhaltungen:
- EP-A- 0 786 646
- WO-A-98/15075
- WO-A-98/34210
- GB-A- 2 195 868
- US-A- 5 543 789

## Beschreibung

Die Erfindung betrifft ein Verfahren zur Ermittlung von Fahrtroutendaten in einem Kraftfahrzeug mit den im Oberbegriff des Anspruchs 1 angegebenen Merkmalen. Weiterhin betrifft die Erfindung eine Vorrichtung zur Ermittlung von Fahrtroutendaten in einem Kraftfahrzeug.

Es sind bereits Navigationssysteme bekannt, bei welchen in einem Kraftfahrzeug nach Eingabe eines gewünschten Fahrtzieles unter Verwendung von auf einer CD-ROM gespeicherten Landkartendaten und von mittels eines GPS-Empfängers gewonnenen Fahrzeugpositionsdaten Fahrtroutendaten ermittelt und dem Benutzer auf einem Bildschirm oder über Lautsprecher signalisiert werden. Ein Beispiel für ein derartiges "statisches" Navigationssystem ist das Navigationssystem GPS1 der Anmelderin, welches über den Fachhandel käuflich erworben werden kann.

Weiterhin ist aus dem Buch "Digitale Technik für Hörfunk und Fernsehen" von Paul Dambacher, herausgegeben vom R. v. Decker's Verlag, G. Schenck GmbH, Heidelberg, 1995, Seite 100-140, das digitale terrestrische Hörrundfunksystem DAB bekannt. Bei diesem wird zwischen zwei Kanälen unterschieden, dem Main Service Channel MSC, und dem Fast Information Channel FIC. Der Main Service Channel enthält die Audio-Dienste (inklusive Program Associated Data, kurz mit PAD bezeichnet) zusammen mit diversen Datendiensten. Der Fast Information Channel enthält Informationen über den aktuellen oder auch zukünftigen Inhalt des Main Service Channel (MCI, Sl, Datenraten, Höhe des Fehlerschutzes). Seine Information wird häufig wiederholt, wodurch sich die Übertragungssicherheit entsprechend erhöht.

Die EP-A-0 871 010 offenbart ein Navigationssystem für ein Kraftfahrzeug, welches zur Ermittlung der kürzesten Fahrtroute Verkehrsinformationsdaten hinzuzieht. Ein Umweg aufgrund einer aktuellen Verkehrsbehinderung wird nur dann berechnet, wenn die Berechnung des Umwegs so schnell möglich ist, dass dadurch keine zu große Verzögerung auftritt.

Die WO-98/ 15075 offenbart ein Telematikgerät für ein Kraftfahrzeug mit Autoradio, Ortungssystem und Funktelefon. Das Funktelefon ist mit einem GSM-Modul ausgerüstet, mit dem digitalisierte Daten an eine Zentrale übertragen werden können. Die Zentrale kann eine Routenberechnung durchführen und das Ergebnis an das Telematikgerät senden. Bei der Routenberechnung kann auch die aktuelle Verkehrssituation berücksichtigt werden.

Ausgehend von diesem Stand der Technik liegt der Erfindung die Aufgabe zugrunde, einen Weg aufzuzeigen, wie bei einem Navigationssystem verbesserte Fahrtroutendaten zur Verfügung gestellt werden können.

Diese Aufgabe wird durch ein Verfahren mit den im Anspruch 1 angegebenen Merkmalen gelöst. Vorteilhafte Ausgestaltungen und Weiterbildungen ergeben sich aus den abhängigen Ansprüchen 2-7. Die Ansprüche 8-10 betreffen eine Vorrichtung zur Ermittlung von Fahrtroutendaten in einem Kraftfahrzeug.

Die Vorteile der Erfindung bestehen insbesondere darin, daß die Ermittlung der Fahrtroutendaten im Unterschied zum Stand der Technik in dem Sinne dynamisch erfolgt, daß sowohl Informationen über die aktuelle Verkehrslage als auch Informationen über vorübergehende und dauerhafte Veränderungen der Verkehrswege in die Ermittlung der Fahrtroutendaten eingehen. Durch das Verbreiten von Daten, die dauerhafte Änderungen der Landkarten betreffen, über ein Rundfunkübertragungssystem ist die Aktualität des zur Berechnung der Fahrtroutendaten notwendigen Kartenmaterials stets gewährleistet. Durch das Einbeziehen von Informationen über die aktuelle Verkehrslage in die Navigation läßt sich das Navigationsergebnis weiter verbessern.

Mittels der im Anspruch 1 angegebenen Merkmale wird erreicht, daß die übertragenen Verkehrsinformationsdaten und Daten, die dauerhafte Änderungen der Landkarten betreffen, die für die Ermittlung der Fahrtroutendaten notwendig sind, bei einem Ausschalten des Empfängers nicht verloren gehen können.

Durch die im Anspruch 9 angegebenen Merkmale stehen kraftfahrzeugseitig nach einem Wiedereinschalten des Empfängers sofort Daten, die dauerhafte Änderungen der Landkarten betreffen, zur Verfügung.

Mittels der in Anspruch 4 angegebenen Maßnahmen wird die beschriebene Ermittlung der Momentanposition des Kraftfahrzeugs verbessert.

Durch die im Anspruch 7 angegebenen Merkmale wird der Benutzer darüber informiert, daß am Markt eine aktualisierte CD-ROM zur Verfügung steht, auf der alle seit dem Erscheinen der vorherigen Version durchgeführten dauerhaften Veränderungen von Straßenbeschilderungen sowie ein Neubau von Straßen, usw., enthalten sind.

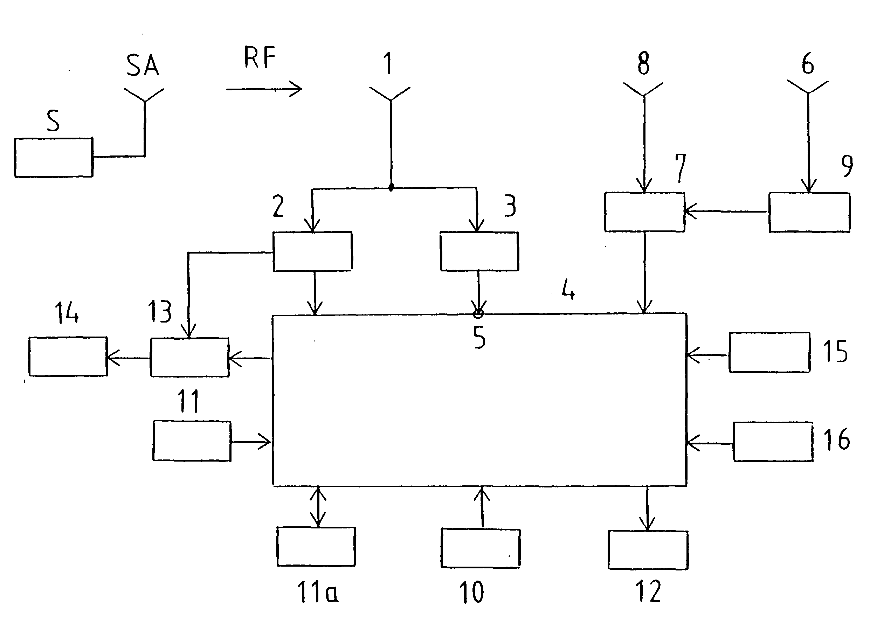

Weitere vorteilhafte Eigenschaften der Erfindung ergeben sich aus der Erläuterung eines Ausführungsbeispiels anhand der Figur:

Diese zeigt ein Blockschaltbild zur Erläuterung eines Verfahrens zur Ermittlung von Fahrtroutendaten in einem Kraftfahrzeug.

Gemäß diesem Verfahren werden in einem Rundfunksender S, bei welchem es sich vorzugsweise um einen DAB-Sender handelt, digitale Rundfunksignale RF erzeugt und über eine Sendeantenne SA ausgestrahlt. Bei diesen Rundfunksignalen RF handelt es sich um einen Datenstrom, in welchem im Zeitmultiplex unter anderem digitale Audiodaten, programmbezogene digitale Zusatzdaten, digitale Verkehrsinformationsdaten und digitale Daten, die dauerhafte Änderungen der Landkarten betreffen, enthalten sind.

Diese Signale werden einer mobilen Empfangsvorrichtung zugeführt, welche in einem Kraftfahrzeug angeordnet ist. Dort werden die übertragenen Rundfunksignale von einer Antenne 1 aufgenommen und an den Eingang eines ersten DAB-Empfangsmoduls 2 und den Eingang eines zweiten DAB-Empfangsmoduls 3 weitergegeben.

Das DAB-Empfangsmodul 2 ist zur Auswertung übertragener Audiodaten und zugehöriger programmbegleitender Zusatzdaten, sowie diverser Datendienste, vorgesehen. Die am Ausgang des DAB-Empfangsmoduls 2 zur Verfügung stehenden Audiosignale werden einer Audiowiedergabevorrichtung 13 zugeführt. Diese ist mit einer Lautsprechereinheit 14 verbunden, über welche die Audiosignale abgestrahlt werden. Die programmbegleitenden Zusatzdaten, bei denen es sich beispielsweise um Titel einer momentan übertragenen Rundfunksendung handelt, werden einem Mikrocomputer 4 zugeführt, in welchem sie ausgewertet werden. Nach ihrer Auswertung können sie auf einem Display 12 dargestellt werden. Besonders geeignet hat sich die Benutzung eines LCD-Displays ergeben.

Das zweite DAB-Empfangsmodul 3 ist zur Abtrennung der digitalen Verkehrsinformationsdaten und der digitalen Daten, die dauerhafte Änderungen der Landkarten betreffen, aus dem übertragenen Datenstrom vorgesehen. Die am Ausgang des DAB-Empfangsmoduls 3 zur Verfügung stehenden Signale werden dem Mikrocomputer 4 zur Auswertung zugeführt.

Dieser erhält weiterhin Positionsdaten von einem GPS-Modul 7, welches über eine GPS-Antenne 8 von verschiedenen Satelliten abgestrahlte Signale empfängt und zur Ermittlung der momentanen Position des Kraftfahrzeugs an den Mikrocomputer 4 weiterleitet. Diesen Signalen des GPS-Moduls 7 können Korrekturdaten überlagert sein, die dem GPS-Modul 7 von einem DGPS-Empfänger 9 zugeführt werden. Der DGPS-Empfänger 9 ist an eine Empfangsantenne 6 angeschlossen und empfängt über diese die genannten Korrekturdaten zu den augenblicklichen GPS-Daten, welche Korrekturdaten von genau vermessenen Hilfssendern ausgestrahlt werden. Mittels dieser Korrekturdaten können die empfangenen GPS-Daten derart verbessert werden, daß die Position des Kraftfahrzeugs bis auf eine Genauigkeit von ca. 5 Meter ermittelt werden kann.

Die Positionsermittlung des Kraftfahrzeugs wird dadurch weiter verbessert, daß dem Mikrocomputer Ausgangssignale eines Tachometers 15 und/oder eines Gyroskops 16 zugeführt werden. Durch die Berücksichtigung der vom Gyroskop 16 gelieferten Signale kann wesentlich schneller als über GPS allein ein eventueller Fahrtrichtungswechsel festgestellt und bei der Ermittlung von Fahrtroutendaten berücksichtigt werden. Dies ist beispielsweise dann von Bedeutung, wenn das Fahrzeug um eine Kurve gefahren oder abgebogen ist. Durch Einbeziehen der Geschwindigkeitsinformation vom Tachometer 15 kann sogar für einen kurzen Zeitraum auch bei unterbrochenem Rundfunksignalempfang navigiert werden, beispielsweise in Tunnels. Die genannten Tachoinformationen werden direkt aus den Bordsignalleitungen des Kraftfahrzeugs abgeleitet.

Zur Ermittlung der Fahrtroutendaten werden weiterhin Landkartendaten benötigt. Diese werden dem Mikrocomputer 4 von.einem CD-ROM-Speicher 11 zur Verfügung gestellt, der in ein CD-ROM-Laufwerk des Empfängers eingelegt ist. In diesem CD-ROM-Speicher 11 sind für das gesamte Gebiet der Bundesrepublik Deutschland detaillierte Landkartendaten in digitaler Form abgespeichert. Zu diesen Landkartendaten gehören unter anderem Informationen über das gesamte Straßennetz in der Bundesrepublik sowie ein komplettes Ortsverzeichnis.

Ferner benötigt der Mikrocomputer 4 zur Ermittlung der Fahrtroutendaten Informationen über das jeweilige Fahrtziel. Diese werden unter Verwendung einer Bedientastatur 10 eingegeben und an den Mikrocomputer 4 weitergeleitet.

Der Mikrocomputer 4 ist derart programmiert, daß er nach der Eingabe eines Fahrtzieles mittels der Bedientastatur 10 unter Verwendung der vom GPS-Modul 7, des Tachogenerators 15, des Gyroskops 16, des CD-ROM-Speichers 11 und des DAB-Empfangsmoduls 3 gelieferten Daten Fahrtroutendaten ermittelt, die dem Benutzer beispielsweise in Form eines auf dem Display 12 dargestellten Fahrtrichtungspfeiles und/oder in Form eines über die Lautsprechereinheit 14 abgestrahlten Sprachsignals signalisiert werden.

Da es sich bei den vom DAB-Empfangsmodul 3 gelieferten Signalen um aktuelle Verkehrsmeldungen und um Daten, die dauerhafte Änderungen der Landkarten betreffen, handelt, kann die Fahrtroutenermittlung in vorteilhafter Weise dynamisch erfolgen. Dies bedeutet, daß bei der Fahrtroutenermittlung nicht nur Informationen über zähfließenden Verkehr, Staus, stundenweise Straßensperrungen, tageweise Umleitungen und zeitweise Fahrtrichtungsänderungen berücksichtigt werden, sondern auch auf dem vorhandenen CD-ROM-Speicher nicht berücksichtigte dauerhafte Veränderungen des Straßenbildes, die beispielsweise durch einen Neubau von Straßen und Autobahnabschnitten sowie durch dauerhafte Fahrtrichtungsänderungen bedingt sind.

Erfindungsgemäß ist der Mikrocomputer 4 mit einem nichtflüchtigen Speicher 11a verbunden, der zur Abspeicherung der vom DAB-Empfangsmodul 3 gelieferten Signale vorgesehen ist, d. h. der aktuellen Verkehrsinformationsdaten und der Daten, die dauerhafte Änderungen der Landkarten betreffen. Durch diese nichtflüchtige Abspeicherung wird sichergestellt, daß auch bei einem Ausschalten des Empfängers sofort nach dem Wiedereinschalten insbesondere Daten, die dauerhafte Änderungen der Landkarten betreffen, zur Verfügung stehen, die bei einer Ermittlung von Fahrtroutendaten verwendet werden können.

Ist eine derartige nichtflüchtige Abspeicherung von Daten, die dauerhafte Änderungen der Landkarten betreffen, nicht vorgesehen, dann muß erst ein kompletter Übertragungszyklus dieser Daten abgewartet werden, um zusätzlich zu den vom CD-ROM-Speicher 11 abgeleiteten Landkartendaten auch Daten, die dauerhafte Änderungen der Landkarten betreffen, bei der Ermittlung von Fahrtroutendaten berücksichtigen zu können.

Die Daten, die dauerhafte Änderungen der Landkarten betreffen, werden im übertragenen Datenstrom zusammen mit einer Versionsnummer übertragen und im Speicher 11a wird auch diese Versionsnummer abgespeichert. Dies erlaubt es in einfacher Weise, im Mikrocomputer 4 einen Vergleich zwischen der abgespeicherten Versionsnummer und der aus dem aktuellen Datenstrom abgeleiteten Versionsnummer durchzuführen, um zu erkennen, ob die gültige Version der Daten, die dauerhafte Änderungen der Landkarten betreffen, bereits im Speicher 11a abgespeichert ist oder nicht. Ergibt dieser Vergleich, daß die aktuellen Daten, die dauerhafte Änderungen der Landkarten betreffen, noch nicht im Speicher 11a abgespeichert sind, dann initiiert der Mikrocomputer 4 eine derartige Abspeicherung der aktuellen Daten, die dauerhafte Änderungen der Landkarten betreffen, inklusive deren Versionsnummer im nichtflüchtigen Speicher 11a.

Eine weitere vorteilhafte Weiterbildung der Erfindung besteht darin, im Rundfunksender S dann CD-ROM-Kennsignale zu erzeugen und in den übertragenen Datenstrom einzufügen, wenn am Markt eine aktualisierte Version des CD-ROM-Speichers 11 erhältlich ist. Diese CD-ROM-Kennsignale werden empfangsseitig im Mikrocomputer 4 erkannt und dem Benutzer optisch auf dem Display 12 oder akustisch über die Lautsprechereinheit 14 signalisiert. Dieser kann dann die nun erhältliche Version des CD-ROM-Speichers 11 erwerben und anstelle der Vorgängerversion in das CD-ROM-Laufwerk einsetzen. Auf der neuen Version des CD-ROM-Speichers sind sämtliche dauerhaften Veränderungen der Landkartendaten, die auch schon in Form von Daten, die dauerhafte Änderungen der Landkarten betreffen, übertragen wurden, enthalten. Folglich kann nach dem Einsetzen eines neuen CD-ROM-Speichers in die Empfangsvorrichtung der Inhalt des Speichers 11a wieder gelöscht werden. Durch die beschriebene Übertragung und empfangsseitige Abspeicherung von Daten, die dauerhafte Änderungen der Landkarten betreffen, wird erreicht, daß der Zeitraum bis zur Neuauflage eines aktualisierten CD-ROM-Speichers verlängert werden kann. Dies bedeutet für den Benutzer eine Kosteneinsparung bezüglich des Empfangsequipments.

Beim vorstehend beschriebenen System werden die Verkehrsinformationsdaten vorzugsweise regionalisiert ausgestrahlt. Beispielsweise sind bundesweit ca. 15 Senderegionen vorgesehen. Im Unterschied dazu werden die Daten, die dauerhafte Änderungen der Landkarten betreffen, in identischer Form bundesweit ausgestrahlt, d. h. in allen 15 Senderegionen.

## Patentansprüche

1. Verfahren zur Ermittlung von Fahrtroutendaten in einem Kraftfahrzeug, bei welchem ein Fahrtziel vorgegeben, die Momentanposition des Kraftfahrzeugs ermittelt und die Fahrtroutendaten durch Auswertung der Momentanposition des Kraftfahrzeugs, des vorgegebenen Fahrtzieles und kraftfahrzeugseitig abgespeicherter Landkartendaten ermittelt werden, wobei zur Ermittlung der Fahrtroutendaten zusätzlich aktuelle Verkehrsinformationsdaten verwendet werden,
**dadurch gekennzeichnet,**
**dass** zur Ermittlung der Fahrtroutendaten zusätzlich Daten, die dauerhafte Änderungen der Landkarten betreffen, verwendet werden und dass die Verkehrsinformationsdaten und die Daten, die dauerhafte Änderungen der Landkarten betreffen, digitale Daten sind und im Zeitmultiplex zusammen mit Audiosignaldaten im digitalen Datenstrom eines digitalen Audio-Rundfunkübertragungssystem übertragen werden, und dass die Daten, die dauerhafte Änderungen der Landkarten betreffen, zusammen mit einer Versionsnummer übertragen werden und zusammen mit dieser Versionsnummer in einem nichtflüchtigen Speicher (11a) abgespeichert werden.

2. Verfahren nach Anspruch 1,
**dadurch gekennzeichnet,**
**dass** die kraftfahrzeugseitig abgespeicherten Landkartendaten nichtflüchtig in einem CD-ROM-Speicher (11) abgespeichert sind und Landkartendaten für ein gesamtes Land enthalten.

3. Verfahren nach einem der vorhergehenden Ansprüche,
**dadurch gekennzeichnet,**
**dass** die Verkehrsinformationsdaten und die Daten, die dauerhafte Änderungen der Landkarten betreffen, zyklisch wiederholt übertragen werden und/oder die Verkehrsinformationsdaten Informationen über die momentane Verkehrsdichte und Informationen über zeitlich befristete Beschilderungsveränderungen enthalten und/oder dass die Verkehrsinformationsdaten regionalisiert übertragen werden und/oder die Verkehrsinformationsdaten und die Daten, die dauerhafte Änderungen der Landkarten betreffen, kraftfahrzeugseitig in einem nichtflüchtigen Speicher (11a) abgespeichert und bei aktiviertem Empfänger ständig aktualisiert werden.

4. Verfahren nach einem der vorhergehenden Ansprüche,
**dadurch gekennzeichnet,**
**dass** die Momentanposition des Kraftfahrzeugs unter Verwendung eines GPS-Empfängers (7) ermittelt wird und insbesondere bei der Ermittlung der Momentanposition des Kraftfahrzeugs zusätzlich die Ausgangssignale eines Gyroskops (16) und/oder eines Tachometers (15) und/oder eines DGPS-Empfängers (9) berücksichtigt werden, welcher zum Empfang von von Hilfssendern ausgestrahlten Korrekturdaten zu den momentanen GPS-Daten vorgesehen ist.

5. Verfahren nach einem der vorhergehenden Ansprüche,
**dadurch gekennzeichnet,**
**dass** die Daten, die dauerhafte Änderungen der Landkarten betreffen, landesweit in allen Senderegionen ausgestrahlt werden.

6. Verfahren nach einem der vorhergehenden Ansprüche,
**dadurch gekennzeichnet,**
**dass** die Fahrtroutendaten in einem Mikrocomputer (4) ermittelt werden und/oder dem Benutzer optisch auf einem Display (12) und/oder akustisch über einen Lautsprecher (14) signalisiert werden.

7. Verfahren nach einem der vorhergehenden Ansprüche 2-6,
**dadurch gekennzeichnet,**
**dass** über das Rundfunkübertragungssystem CD-ROM-Kennsignale übertragen werden, die den Benutzer über die Existenz eines aktualisierten CD-ROM-Speichers (11) informieren, und diese CD-ROM-Kennsignale dem Benutzer optisch auf dem Display und/oder akustisch über den Lautsprecher signalisiert werden.

8. Vorrichtung zur Ermittlung von Fahrtroutendaten in einem Kraftfahrzeug, mit
- einer Bedientastatur (10) zur Eingabe eines Fahrtzieles,
- einer Vorrichtung (6-9, 15, 16) zur Ermittlung von Positionsdaten des Kraftfahrzeugs,
- einem CD-ROM-Laufwerk zur Aufnahme eines CD-ROM-Speichers (11), in welchem Landkartendaten abgespeichert sind, und
- einem Mikrocomputer (4), welcher mit der Bedientastatur (10), der Vorrichtung (6-9, 15, 16) zur Ermittlung von Positionsdaten und dem CD-ROM-Laufwerk verbunden und zur Ermittlung von Fahrtroutendaten vorgesehen ist und einen Eingangsanschluss (5) für aktuelle Verkehrsinformationsdaten aufweist und derart programmiert ist, dass er die aktuellen Verkehrsinformationsdaten bei der Ermittlung der Fahrtroutendaten berücksichtigt
**dadurch gekennzeichnet,**
**dass** der Eingangsanschluss (5) des Mikrocomputers (4) auch für Daten, die dauerhafte Änderungen der Landkarten betreffen, vorgesehen ist und
**dass** der Mikrocomputer (4) derart programmiert ist, dass er neben den aktuellen Verkehrsinformationsdaten auch Daten, die dauerhafte Änderungen der Landkarten betreffen, bei der Ermittlung der Fahrtroutendaten berücksichtigt, und
**dass** er einen nichtflüchtigen Speicher (11a) zur Abspeicherung von Daten, die dauerhafte Änderungen der Landkarten betreffen, aufweist, der einen Speicherbereich zur Abspeicherung einer den Daten, die dauerhafte Änderungen der Landkarten betreffen, zugeordneten Versionsnummer aufweist.

9. Vorrichtung nach Anspruch 8,
**dadurch gekennzeichnet,**
**dass** die Vorrichtung zur Ermittlung von Positionsdaten ein GPS-Modul (7) aufweist und insbesondere zusätzlich einen DGPS-Empfänger (9) und/oder ein Gyroskop (16) und/oder einen Tachometer (15) aufweist.

10. Vorrichtung nach einem der Ansprüche 8 oder 9,
**dadurch gekennzeichnet,**
**dass** sie einen Vergleicher (4) aufweist, in welchem ein Vergleich einer abgespeicherten Versionsnummer mit einer aus einem übertragenen Rundfunksignal abgeleiteten Versionsnummer erfolgt, und dass der Mikrocomputer bei negativem Vergleichsergebnis die Abspeicherung der neuen Versionsnummer und neuer Daten, die dauerhafte Änderungen der Landkarten betreffen, im nichtflüchtigen Speicher (11a) initiiert und/oder dass sie ein Display (12) und/oder einen Lautsprecher (14) aufweist, mittels dessen die Fahrtroutendaten dem Benutzer signalisiert werden und/oder dass sie zwei DAB-Empfangsmodule (2,3) aufweist, von denen eines zur Selektierung von Audiodaten und das andere zur Selektierung von aktuellen Verkehrsinformationsdaten und Daten, die dauerhafte Änderungen der Landkarten betreffen, vorgesehen ist.

## Claims

1. A method for the determination of trip route data in a motor vehicle, wherein a trip destination is predetermined, the instantaneous position of the motor vehicle is determined and the trip route data are determined by evaluation of the instantaneous position of the motor vehicle, of the predetermined trip destination and of map data stored on the vehicle side, with current traffic information data additionally being used for the determination of the trip route data,
**characterised in that**,
for the determination of the trip route data, data are additionally used which relate to permanent changes to the maps; and **in that** the traffic information data and the data which relate to permanent changes in the maps are digital data and are transmitted in time multiplex together with audio signal data in the digital data stream of a digital audio radio broadcasting system; and **in that** the data which relate to permanent changes to the maps are transmitted together with a version number and are stored together with this version number in a non-volatile memory (11a).

2. A method in accordance with claim 1, **characterised in that** the map data stored on the vehicle side are stored in a non-volatile manner in a CD-ROM memory (11) and contain map data for a whole country.

3. A method in accordance with any one of the preceding claims, **characterised in that** the traffic information data and the data which related to permanent changes to the maps are transmitted cyclically in a repeated manner and/or the traffic information data contain information on the instantaneous traffic density and information on time-limited signage changes; and/or **in that** the traffic information data are transmitted on a regionalised basis and/or the traffic information data and the data which relate to permanent changes to the maps are stored on the vehicle side in a non-volatile memory (11 a) and are constantly updated when the receiver is activated.

4. A method in accordance with any one of the preceding claims, **characterised in that** the instantaneous position of the motor vehicle is determined using a GPS receiver (7) and, in particular on the determination of the instantaneous position of the motor vehicle, the output signals of a gyroscope (16) and/or of a speedometer (15) and/or of a DGPS receiver (9) are additionally taken into account, said receiver being provided for the reception of correction data with respect to the instantaneous GPS data broadcast by auxiliary transmitters.

5. A method in accordance with any one of the preceding claims, **characterised in that** the data which relate to permanent changes to the maps are broadcast nationally in all transmission regions.

6. A method in accordance with any one of the preceding claims, **characterised in that** the trip route data are determined in a microcomputer (4) and/or are signalled to the user visually on a display (12) and/or acoustically via a loudspeaker (14).

7. A method in accordance with any one of the preceding claims 2-6, **characterised in that** CD-ROM identification signals are transmitted over the radio broadcasting system which inform the use of the existence of an updated CD-ROM memory (11) and these CD-ROM identification signals are signalled to the user visually on the display and/or acoustically via the loudspeaker.

8. An apparatus for the determination of trip route data in a motor vehicle comprising
- an operating keypad (10) for entering a trip destination;
- an apparatus (6-9, 15, 16) for the determination of position data of the motor vehicle;
- a CD-ROM drive for the reception of a CD-ROM memory (11) in which map data are stored; and
- a microcomputer (4) which is connected to the operating keypad (10), to the apparatus (6-9, 15-16) for the determination of position data and to the CD-ROM drive and is provided for the determination of trip route data and has an input connection (5) for current traffic information data and is programmed such that it takes account of the current traffic information data in the determination of the trip route data,
**characterised in that**
the input connection (5) of the microcomputer (4) is also provided for data which relate to permanent changes to the maps; and
**in that** the microcomputer (4) is programmed such that, in addition to the current traffic information data, it also takes account of data which relate to permanent changes to the maps in the determination of the trip route data; and
**in that** it has a non-volatile memory (11a) for the storing of data which relate to permanent changes to the map data, said memory having a memory region for the storing of a version number associated with the data which relate to permanent changes of the maps.

9. An apparatus in accordance with claim 8, **characterised in that** the apparatus for the determination of position data has a GPS module (7) and in particular additionally a DGPS receiver (9) and/or a gyroscope (16) and/or a speedometer (15).

10. An apparatus in accordance with any one of the claims 8 or 9, **characterised in that** it has a comparator (4) in which a comparison of a stored version number with a version number derived from a transmitted radio signal takes place; and **in that**, on a negative comparison result, the microcomputer initiates the storing of the new version number and of new data which relate to permanent changes to the maps in the non-volatile memory (11a); and/or **in that** it has a display (12) and/or a loudspeaker (14) by means of which the trip route data are signalled to the user; and/or **in that** it has two DAB receiver modules (2, 3) of which one is provided for the selection of audio data and the other is provided for the selection of current traffic information data and data which relate to permanent changes to the maps.

## Revendications

1. Procédé de détermination de données d'itinéraire routier dans un véhicule automobile, dans lequel on prédéfinit une destination, on détermine la position momentanée du véhicule automobile et on détermine les données d'itinéraire routier en exploitant la position momentanée du véhicule automobile, la destination prédéfinie et les données de cartes géographiques enregistrées dans le véhicule, dans lequel, pour déterminer les données d'itinéraire routier, on utilise en plus des données courantes d'informations sur la circulation, **caractérisé en ce que**, pour déterminer les données d'itinéraire routier, on utilise en plus des données qui concernent des modifications durables de cartes géographiques, **en ce que** les données d'informations sur la circulation et les données qui concernent des modifications durables de cartes géographiques sont des données numériques et sont transmises par multiplexage par répartition dans le temps conjointement avec des données de signaux audio dans le flux de données numériques d'un système de radiotransmission audionumérique et **en ce que** les données qui concernent des modifications durables de cartes géographiques sont transmises conjointement avec un numéro de version et sont enregistrées conjointement avec ce numéro de version dans une mémoire non volatile (11a).

2. Procédé selon la revendication 1, **caractérisé en ce que** les données de cartes géographiques enregistrées dans le véhicule automobile sont enregistrées de manière non volatile dans une mémoire CD-ROM (11) et contiennent des données de cartes géographiques pour l'ensemble d'un pays.

3. Procédé selon l'une quelconque des revendications précédentes, **caractérisé en ce que** les données d'information sur la circulation et les données qui concernent des modifications durables de cartes géographiques sont transmises en mode de répétition cyclique et/ou les données d'informations sur la circulation contiennent des informations sur la densité momentanée de la circulation et des informations sur des modifications de signalisation limitées dans le temps et/ou **en ce que** les données d'informations sur la circulation sont transmises de manière régionalisée et/ou les données d'informations sur la circulation et les données qui concernent des modifications durables de cartes géographiques sont enregistrées dans le véhicule automobile dans une mémoire non volatile (11a) et sont en permanence actualisées lorsque le récepteur est activé.

4. Procédé selon l'une quelconque des revendications précédentes, **caractérisé en ce que** la position momentanée du véhicule automobile est déterminée en utilisant un récepteur GPS (7) et, en particulier lors de la détermination de la position momentanée du véhicule automobile, on tient en plus compte des signaux de sortie d'un gyroscope (16) et/ou d'un tachymètre (15) et/ou d'un récepteur DGPS (9), qui est prévu pour recevoir des données de correction émises par des émetteurs auxiliaires destinées à corriger les données GPS momentanées.

5. Procédé selon l'une quelconque des revendications précédentes, **caractérisé en ce que** les données qui concernent des modifications durables de cartes géographiques, sont émises à l'échelle nationale dans toutes les régions d'émission.

6. Procédé selon l'une quelconque des revendications précédentes, **caractérisé en ce que** les données d'itinéraire routier sont déterminées dans un microordinateur (4) et/ou sont signalisées à l'utilisateur optiquement sur un écran d'affichage (12) et/ou acoustiquement via un haut-parleur (14).

7. Procédé selon l'une quelconque des revendications précédentes 2 à 6, **caractérisé en ce que** sont transmis via le système de radiotransmission des signaux indicatifs de CD-ROM qui informent l'utilisateur de l'existence d'une mémoire CD-ROM actualisée (11) et **en ce que** ces signaux indicatifs de CD-ROM sont signalisés à l'utilisateur optiquement sur l'écran d'affichage et/ou acoustiquement via le haut-parleur.

8. Procédé pour déterminer des données d'itinéraire routier dans un véhicule automobile, avec
- un clavier de commande (10) pour saisir une destination,
- un dispositif (6 à 9, 15, 16) pour déterminer des données de position du véhicule automobile,
- un lecteur CD-ROM pour recevoir une mémoire CD-ROM, dans laquelle des données de cartes géographiques sont enregistrées, et
- un microordinateur (4), qui est connecté au clavier de commande (10), au dispositif (6 à 9, 15, 16) pour déterminer des données de position et au lecteur CD-ROM et qui est prévu pour déterminer des données d'itinéraire routier, et qui présente une connexion d'entrée (5) pour les données courantes d'informations sur la circulation et qui est programmé de manière à tenir compte des données d'informations courantes sur la circulation lors de la détermination des données d'itinéraire routier, **caractérisé en ce que** la connexion d'entrée (5) du microordinateur (4) est également prévue pour des données qui concernent des modifications durables des cartes géographiques et **en ce que** le microordinateur (4) est programmé de sorte que, hormis les données d'informations courantes sur la circulation, il tienne également compte des données qui concernent des modifications durables de cartes géographiques lors de la détermination des données d'itinéraire routier, et **en ce qu'**il présente une mémoire non volatile (11a) pour enregistrer des données qui concernent des modifications durables de cartes géographiques, mémoire qui présente une zone de mémoire pour enregistrer un numéro de version affecté aux données qui concernent des modifications durables de cartes géographiques.

9. Dispositif selon la revendication 8, **caractérisé en ce que** le dispositif de détermination de données de position présente un module GPS (7) et, en particulier, en plus un récepteur DGPS (9) et/ou un gyroscope (16) et/ou un tachymètre (15).

10. Dispositif selon l'une quelconque des revendications 8 ou 9, **caractérisé en ce qu'**il présente un comparateur (4), dans lequel une comparaison s'effectue entre un numéro de version enregistré et un numéro de version issu d'un signal radio transmis et **en ce que** le microordinateur, en cas de résultat comparatif négatif, initie l'enregistrement du nouveau numéro de version et de nouvelles données qui concernent des modifications durables de cartes géographiques, dans la mémoire non volatile (11a) et/ou **en ce qu'**il présente un écran d'affichage (12) et/ou un haut-parleur (14), au moyen duquel les données d'itinéraire routier sont signalisées à l'utilisateur et/ou **en ce qu'**il présente deux modules récepteurs DAB (2,3) dont l'un est prévu pour la sélection de données audio et l'autre est prévu pour la sélection de données courantes d'informations sur la circulation et des données qui concernent des modifications durables de cartes géographiques.
